# EUROPÄISCHE PATENTSCHRIFT

(11) **EP 3 009 964 B1**
(45) Veröffentlichungstag und Bekanntmachung des Hinweises auf die Patenterteilung: **25.04.2018**
(21) Anmeldenummer: 15002931.2
(22) Anmeldetag: 14.10.2015
(51) Int. Cl.: G06K 19/07, G06K 19/077, B42D 25/00

(54) **DATENTRÄGER MIT EINER LICHTQUELLE UND EINEM GRAPHISCHEN ELEMENT**
DATA CARRIER COMPRISING A LIGHT SOURCE AND A GRAPHICAL ELEMENT
SUPPORT DE DONNEES AYANT UNE SOURCE LUMINEUSE ET UN ELEMENT GRAPHIQUE

(30) Priorität: 16.10.2014 DE 102014015277
(43) Veröffentlichungstag der Anmeldung: 20.04.2016
(73) Patentinhaber: Giesecke+Devrient Mobile Security GmbH, 81677 München (DE)
(72) Erfinder: Kluge, Stefan, 80997 München (DE)

(56) Entgegenhaltungen:
- WO-A2-03/106186
- DE-A1-102005 039 319
- DE-A1-102011 117 044

## Beschreibung

Die Erfindung betrifft einen Datenträger mit einer Lichtquelle und einem graphischen Element, wobei das graphische Element durch eine in dem Datenträger angeordnete Lichtquelle in Abhängigkeit des Schaltzustands der Lichtquelle veränderbar ist.

Chipkarten als Datenträger werden in vielen Bereichen eingesetzt, beispielsweise als Ausweisdokumente, zum Nachweis einer Zugangsberechtigung zu einem Mobilfunknetz oder zur Durchführung von Transaktionen des bargeldlosen Zahlungsverkehrs. Eine Chipkarte weist einen Kartenkörper und einen in den Kartenkörper eingebetteten integrierten Schaltkreis auf. Die eigentliche Funktionalität der Chipkarte wird vom integrierten Schaltkreis bereitgestellt. Hierzu sind in dem integrierten Schaltkreis beispielsweise Daten gespeichert und Anwendungen implementiert. Der Kartenkörper dient der Handhabung der Chipkarte und kann zudem als Träger von visuellen Informationen und von Sicherheitsmerkmalen dienen. Dabei wird in der Regel versucht, der Chipkarte über eine geeignete Gestaltung des Kartenkörpers ein attraktives Aussehen zu verleihen.

Aus der WO 2007/020051 A1 ist ein kartenförmiger Datenträger mit einem Kartenkörper bekannt, auf dem ein graphisches Element dargestellt ist. Der Kartenkörper weist ein Kunststoffmaterial zur Umwandlung von eingestrahltem Licht in Sekundärlicht und zur Weiterleitung des Sekundärlichts innerhalb des Kunststoffmaterials zum graphischen Element auf. In dem Kunststoffmaterial ist ein fluoreszierender Farbstoff eingelagert, wobei bei Bestrahlung mit Licht Farbstoffpartikel zur Fluoreszenz angeregt werden und in alle Richtungen Fluoreszenzlicht ausstrahlen, das eine größere Wellenlänge als das einfallende Licht aufweist. Um die gesamte Fläche des graphischen Elements gleichmäßig auszuleuchten, kann eine dreidimensionale Oberflächenstruktur des Kunststoffmaterials vorgesehen werden. Aus dieser Schrift ist ferner eine Ausführung bekannt, bei der eine Leuchtdiode in dem Kunststoffmaterial angeordnet ist. Die Leuchtdiode ist - in lateraler Richtung - versetzt unterhalb einer opaken Schicht angeordnet, um zu verhindern, dass die Leuchtdiode von außerhalb des Kartenkörpers sichtbar ist. Die Leuchtdiode ermöglicht es, das graphische Element, unabhängig von den jeweils herrschenden Lichtverhältnissen hervorzuheben. Ein Nachteil der in dieser Schrift aufgeführten Ausführungsvarianten besteht darin, dass der optische Unterschied zwischen ein- und ausgeschalteter Leuchtdiode nur einen Unterschied in der Leuchtkraft, nicht aber z.B. in der Farbe ermöglicht.

DE 10 2005 039 319 A1 beschreibt einen kartenförmigen Datenträger mit einem Kartenkörper, auf dem ein graphisches Element dargestellt ist. Der Kartenkörper weist ein Kunststoffmaterial zur Umwandlung von eingestrahltem Licht in Sekundärlicht und zur Weiterleitung des Sekundärlichts innerhalb des Kunststoffmaterials zum graphischen Element oder zu einem Teilbereich des graphischen Elements auf. Der kartenförmige Datenträger zeichnet sich dadurch aus, dass der Kartenkörper eine Lichtquelle zur Einstrahlung von Licht in einen durch das Kunststoffmaterial gebildeten Formkörper aufweist.

DE 10 2011117 044 A1 beschreibt ein Sicherheitselement. Das Sicherheitselement weist eine Sichtseite und eine dieser gegenüberliegende Rückseite auf. Das Sicherheitselement umfasst mindestens eine Leuchtschicht, welche Licht aussenden kann, sowie mindestens eine Maskenschicht, welche bei einer Betrachtung des Sicherheitselements von der Sichtseite her vor der mindesten einen Leuchtschicht angeordnet ist. Die mindestens eine Maskenschicht weist mindestens einen opaken Bereich und mindestens zwei transparente Öffnungen auf. Die mindestens zwei transparenten Öffnungen besitzen einen wesentlich höheren Transmissionsgrad als der mindestens eine opake Bereich in Bezug auf von der mindestens einen Leuchtschicht ausgesendetem bzw. bereitgestelltem Licht, vorzugsweise einen um mindestens 20% höheren Transmissionsgrad, besonders bevorzugt einen um mindestens 50 % höheren Transmissionsgrad.

Es ist Aufgabe der Erfindung eine kartenförmige Chipkarte anzugeben, bei der ein Element in einem durch eine Lichtquelle beleuchteten Bereich für einen Nutzer nur nach Aktivierung der Lichtquelle sichtbar ist.

Diese Aufgabe wird gelöst durch eine Chipkarte gemäß den Merkmalen des Anspruchs 1. Vorteilhafte Ausgestaltungen ergeben sich aus den abhängigen Patentansprüchen.

Der vorliegende Datenträger umfasst eine Lichtquelle und ein graphisches Element, wobei das graphische Element in seiner Erscheinung durch die in dem Körper des Datenträgers angeordnete Lichtquelle in Abhängigkeit des Schaltzustands der Lichtquelle veränderbar ist. Der Datenträgerkörper umfasst einen durch die Lichtquelle beleuchtbaren Lichtleiter, der seinerseits einen transparenten Abschnitt umfasst. Unterhalb des transparenten Abschnitts des Lichtleiters ist zumindest im Bereich des graphischen Elements eine Fläche angeordnet, die bei ausgeschalteter Lichtquelle wahrnehmbar ist.

Der Datenträger zeichnet sich dadurch aus, dass die Erkennbarkeit des graphischen Elements vom Schaltzustand der Lichtquelle abhängt. Bei ausgeschalteter Lichtquelle ist die unterhalb des transparenten Bereichs angeordnete Fläche, beispielsweise ein Aufdruck oder die Farbe der entsprechenden Materialschicht der Datenträgerkörpers, wahrnehmbar. Bei ausgeschalteter Lichtquelle ist das graphische Element für den Betrachter nicht wahrnehmbar. Erst bei eingeschalteter Lichtquelle ist das graphische Element für den Betrachter wahrnehmbar. Bei eingeschalteter Lichtquelle ändert sich die Erscheinung des graphischen Elements aufgrund des in den Lichtleiter eingespeisten Lichts. Die Fläche ist eingerichtet, um das graphische Element bei ausgeschalteter Lichtquelle zu verbergen bzw. das graphische Element erst bei eingeschalteter Lichtquelle wahrnehmbar zu machen.

In einer zweckmäßigen Ausgestaltung umfasst der Lichtleiter neben dem transparenten Bereich einen lichtwandelnden Bereich (Abschnitt) zur Umwandlung von eingestrahltem Licht der Lichtquelle in Sekundärlicht. Das Sekundärlicht wird (innerhalb des lichtwandelnden Bereichs) zu dem transparenten Bereich (Abschnitt) weitergeleitet. In das Kunststoffmaterial des lichtwandelnden Bereichs, z.B. Polycarbonat oder PVC, kann beispielsweise ein fluoreszierender Farbstoff in Form von Farbstoffpartikeln eingelagert sein. Bei Bestrahlung mit Licht werden die Farbstoffpartikel zur Fluoreszenz angeregt und strahlen isotrop, also auch in Richtung des transparenten Bereichs, Fluoreszenzlicht aus. Dadurch verändert das graphische Element seine Farbgebung, sobald die Lichtquelle aktiviert ist. Durch die geeignete Wahl des fluoreszierenden Farbstoffs in dem Kunststoffmaterial kann die Farbe des leuchtenden graphischen Elements bei eingeschalteter Lichtquelle festgelegt werden. Der Bereich des lichtwandelnden Kunststoffmaterials des Lichtleiters ist dabei nicht zum graphischen Element hin gerichtet. Andere Umwandlungsmöglichkeiten, um das Licht der Lichtquelle in Sekundärlicht (einer anderen Wellenlänge) umzuwandeln sind bekannt und anwendbar.

In einer weiteren Ausgestaltung ist die Lichtquelle innerhalb des Lichtleiters unter einer opaken Schicht angeordnet. Hierdurch wird sichergestellt, dass sich die Lichtquelle weder im ein- noch im ausgeschalteten Zustand als Fremdkörper im Datenträger abzeichnet. Darüber hinaus kann das von der Lichtquelle abgegebene Licht gezielt in Richtung des transparenten Bereichs gelenkt werden. Das lichtwandelnde Bereich liegt bevorzugt unter der opaken Schicht.

Der transparente Bereich des Lichtleiters ist vorzugsweise klar transparent. Insbesondere ist der transparente Bereich des Lichtleiters farblos. Als transparent wird der Bereich angesehen, weil er für das (sekundäre und /oder das primäre) Licht durchlässig ist bzw. weil die Fläche unterhalb des transparenten Bereiches vom Betrachter wahrgenommen wird.

Gemäß einer weiteren Ausgestaltung ist die Lichtquelle innerhalb des lichtwandelnden Bereichs angeordnet. Hierdurch kann der Datenträger mit geringer Bauhöhe bereitgestellt werden. Beispielsweise kann die Lichtquelle hierzu von ihr abgegebenes Licht seitlich in den farblos transparenten Bereich leiten. Alternativ kann die Lichtquelle auch außerhalb des lichtwandelnden Kunststoffmaterials angeordnet sein.

In einer weiteren Ausgestaltung kann die opake Schicht durch eine reflektive Metallfolie oder eine Metallisierung gebildet sein bzw. eine solche umfassen. Hierdurch ergibt sich eine höhere Leuchtkraft im Bereich des graphischen Elements, da eine opake Schicht typischerweise eine hohe Absorption aufweist, während eine Metallisierung oder reflektive Metallfolie diese Eigenschaft nicht aufweist. Insbesondere ergibt sich dadurch auch eine gleichmäßigere Ausleuchtung des graphischen Elements. Die reflektive Metallfolie oder Metallisierung kann als gedruckte oder aufgedampfte metallische Farbe bzw. als Farbe mit Metalleffekt oder als aufgepatchte reflektierende Folie, als Hologramm, als Kinegramm oder als vollflächige (sich über den ganzen Datenträgerkörper erstreckend), metallisch reflektierende Folie realisiert sein.

Die Metallfolie oder die Metallisierung kann in einer weiteren Ausgestaltung selektiv entfernt sein, um Austrittsöffnung(en) für von der Lichtquelle abgegebenes Licht zu schaffen. Hierdurch ist es möglich, die Metallisierung bzw. Metallfolie zur Personalisierung des Datenträgers zu nutzen. Als Personalisierungsmerkmal kann beispielsweise eine mittels Laser eingebrachte Ziffernfolge und dergleichen genutzt werden. Insbesondere kann dieses Personalisierungsmerkmal in geeigneter Weise bei eingeschalteter Lichtquelle sichtbar werden. Im Bereich der Austrittsöffnungen kann z.B. Licht bei eingeschalteter Lichtquelle austreten, so dass das Personalisierungsmerkmal durch einen Nutzer wahrnehmbar ist.

Es kann weiterhin vorgesehen sein, dass die Metallfolie oder die Metallisierung eine strukturierte Oberfläche und/oder ein durch Drucken aufgebrachtes Störmuster aufweist. Hierdurch kann eine Verschleierung der Austrittsöffnungen, sofern diese beispielsweise eine Personalisierung darstellen, erfolgen. Das Störmuster kann beispielsweise mit speziellen Kopierschutzfarben realisiert werden, die dann hervortreten, wenn die Chipkarte auf einem Fotokopierer kopiert wird.

Gemäß einer weiteren Ausgestaltung kann der lichtwandelnde Bereich UV (Ultraviolett)-aktive Pigmente umfassen. UV-aktive Pigmente wandeln für den Betrachter nicht sichtbares UV-Licht in sichtbares Licht um. UV-Licht hat eine Wellenlänge, die kürzer ist als die Wellenlänge von sichtbarem Licht. UV-aktive Farbpigmente werden, wenn sie in dem Kunststoffmaterial enthalten sind, je nach Wellenlänge, auf der sie selektiv sind, durch Tageslicht nicht besonders gut angeregt, da in darüber liegenden Schichten, wie z.B. Deckschichten oder Overlays, der dazu nötige UV-Anteil des Tageslichts absorbiert wird. Demgegenüber kann die in direkter Nähe der UV-aktiven Pigmente angeordnete Lichtquelle mit Anteilen von UV-Licht im Spektrum die UV-aktiven Fluoreszenzfarbstoffe direkt anregen. Das emittierte Sekundärlicht kann dann die transparenten Schichten des Datenträgers durchdringen und zum Auge des Betrachters gelangen.

Bevorzugt weist der Datenträger eine für den Betrachter wahrnehmbare optische Grundgestaltung auf, wobei zumindest die wahrnehmbare Fläche angepasst ist, damit der Betrachter bei ausgeschalteter Lichtquelle nur die Grundgestaltung - ohne das graphische Element - wahrnimmt. Zu diesem Zweck können zudem der transparente Abschnitt, die Grundgestaltung und/oder (die zumindest) eine Störfläche aufeinander abgestimmt sein.

Gemäß einer weiteren Ausgestaltung weist der Lichtleiter eine streifenförmige Gestalt auf und erstreckt sich über einen Teil einer Seitenlänge des Datenträgers oder über die gesamte Seitenlänge des Datenträgerkörpers.

Die Lichtquelle leitet gemäß einer weiteren Ausgestaltung von ihr abgegebenes Licht von oben oder von unten in den Lichtleiter, insbesondere in den lichtwandelnden Bereich bzw. dessen Kunststoffmaterial. Die Lichtquelle ist dabei in einer anderen Ebene (Schicht) des Datenträgers angeordnet, als der lichtwandelnde Bereich.

In einer weiteren Ausgestaltung sind mehrere streifenförmig ausgebildete Lichtleiter in mehreren Ebenen des Datenträgerkörpers angeordnet. Zwei in unterschiedlichen Ebenen angeordnete Lichtleiter können sich kreuzen oder parallel verlaufen.

Die vorliegend verwendeten Richtungsangaben "oberhalb" und "unterhalb" sind so gewählt, wie später figürlich dargestellt, mit einem Betrachter der das graphische Element des Datenträgers von oben betrachtet.

Der Datenträger ist vorzugsweise ein tragbarer Datenträger, wie beispielsweise eine Chipkarte. Als tragbarer Datenträger kann aber auch ein RFID-Token, ein USB-Token, eine sichere Massenspeicherkarte, ein Sicherheitsdokument oder ein Ausweisdokument vorliegen. Der Datenträger ist vorzugsweise zum reversiblen Einsetzen oder temporären Einführen in ein Endgerät, wie Kartenleser oder Mobilfunkgerät, vorgesehen.

Die Aufmerksamkeit eines Betrachters eines Datenträgers mit Lichtquelle und graphischem Element für das graphische Element kann erhöht werden durch ein Leuchten einer Kante des Datenträgers bei eingeschalteter Lichtquelle. In bevorzugten Ausgestaltungen ist der Datenträger daher eingerichtet ein Kantenleuchten zu zeigen. Licht der Lichtquelle wird zu einer Kante des Datenträgers geleitet und tritt aus der Kante aus. Das Kantenleuchten ist vorgesehen, um für den Betrachter der Oberseite des Datenträgers wahrnehmbar zu sein.

Das Kantenleuchten wird an mindestens einer (der vier) Teilkante(n) erzeugt, wobei vorzugsweise mindestens 20% bzw. 38% des Kantenumfangs leuchten. Die Kante kann bei eingeschalteter Lichtquelle vollständig leuchten (vollumfänglich). Der Kartenkörper kann eingerichtet werden, einen Anteil des aus der Kante in Richtung des Betrachters der Oberseite austretenden Lichts zu erhöhen, vorzugsweise soweit zu erhöhen, dass an der Kante mehr als ein Drittel des Lichtes zur Oberseite hin austritt.

Die Erfindung wird nachgehend näher anhand der in der Zeichnung dargestellten Ausführungsbeispiele erläutert. Es zeigen:
- Fig. 1: ein erstes Ausführungsbeispiel einer erfindungsgemäß ausgebildeten Chipkarte in einer schematischen Aufsicht, wobei eine in der Chipkarte vorgesehene Lichtquelle ausgeschaltet ist,
- Fig. 2: das erste Ausführungsbeispiel der Chipkarte gemäß Fig. 1 in einer schematischen Schnittdarstellung,
- Fig. 3: das erste Ausführungsbeispiel der Chipkarte gemäß Fig. 1 in einer schematischen Aufsicht, wobei die Lichtquelle eingeschaltet ist,
- Fig. 4: das erste Ausführungsbeispiel der Chipkarte gemäß Fig. 3 in einer schematischen Schnittdarstellung,
- Fig. 5: ein zweites Ausführungsbeispiel der Chipkarte in einer schematischen Schnittdarstellung,
- Fig. 6: ein drittes Ausführungsbeispiel der Chipkarte in einer schematischen Schnittdarstellung,
- Fig. 7: ein viertes Ausführungsbeispiel der Chipkarte in einer schematischen Aufsicht, wobei die in der Chipkarte vorgesehene Lichtquelle ausgeschaltet ist,
- Fig. 8: das vierte Ausführungsbeispiel der Chipkarte gemäß Fig. 7 in einer schematischen Aufsicht, wobei die Lichtquelle eingeschaltet ist,
- Fig. 9: ein fünftes Ausführungsbeispiel der Chipkarte in einer schematischen Aufsicht, wobei die in der Chipkarte enthaltene Lichtquelle ausgeschaltet ist, und
- Fig. 10: das fünfte Ausführungsbeispiel der Chipkarte gemäß Fig. 9 in einer schematischen Aufsicht, in der die Lichtquelle eingeschaltet ist.

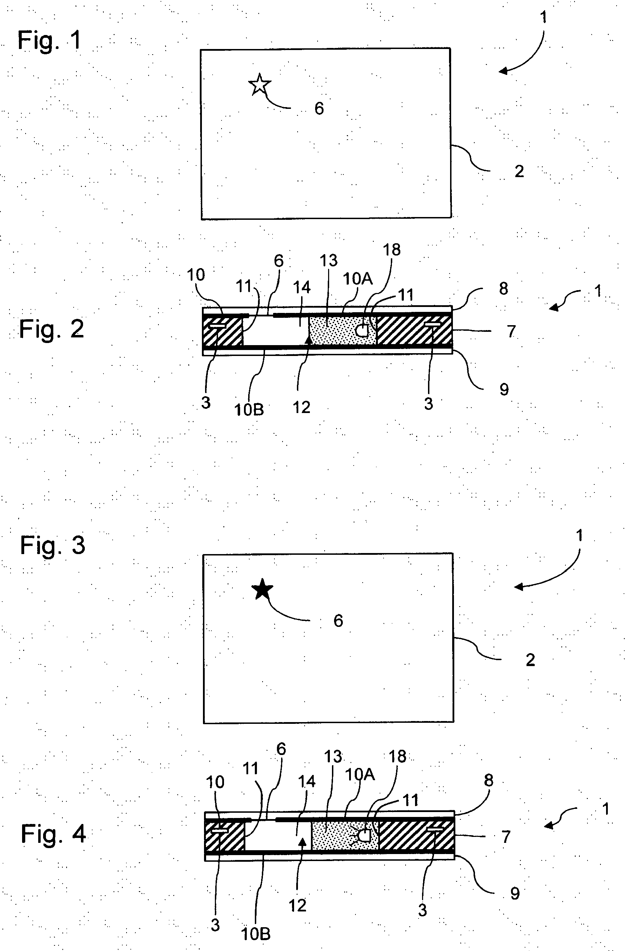

Die Fig. 1 bis Fig. 4 zeigen ein erstes Ausführungsbeispiel einer erfindungsgemäß ausgebildeten Chipkarte 1, wobei die Fig. 1 und 3 jeweils eine Aufsicht und die Fig. 2 und 4 jeweils eine schematische Schnittdarstellung zeigen.

Die Chipkarte 1 weist einen Kartenkörper 2 auf, in dem beispielsweise ein nicht näher dargestelltes Chipmodul eingebettet ist. Das Chipmodul weist einen integrierten Schaltkreis und z.B. ein Kontaktfeld auf, das mit dem ebenfalls nicht dargestellten integrierten Schaltkreis verbunden ist. Zur Durchführung einer Datenübertragung zwischen dem integrierten Schaltkreis und einem figürlich nicht dargestellten externen Gerät wird das Kontaktfeld des Chipmoduls vom externen Gerät berührend kontaktiert. Alternativ kann das Chipmodul auch für eine kontaktlose Übertragung ausgebildet sein und dann insbesondere im Inneren des Kartenkörpers 2 angeordnet sein. Ebenso kann die Chipkarte 1 auch mit einem zeichnerisch nicht dargestellten Magnetstreifen zur Speicherung von Daten ausgestattet sein sowie mit einer Hochprägung versehen sein. Dies gilt jeweils auch für die weiteren Ausführungsbeispiele der Chipkarte 1. Bei diesen wurde ebenfalls von einer zeichnerischen Darstellung des Chipmoduls abgesehen. Als Datenträger wird im Folgenden stets auf eine Chipkarte abgestellt, wobei die jeweiligen Lösungsaspekte ebenso für andere Datenträger anwendbar sind. Sofern im Folgenden von einer Folie gesprochen wird, könnte alternativ jeweils auch von einer Schicht oder Ebene des Datenträgers gesprochen werden.

Der Kartenkörper 2 weist ein graphisches Element 6, beispielsweise in Form einer Beschriftung, einer Flagge, eines Logos, eines Emblems oder eines sonstigen Symbols auf. Wie aus der nachfolgenden Beschreibung ersichtlich werden wird, ist das graphische Symbol 6 in Abhängigkeit eines Schaltzustands einer Lichtquelle 18 für einen Betrachter der Chipkarte 1 erkennbar oder nicht erkennbar. In Fig. 1 ist das graphische Element 6 zur Veranschaulichung für den Leser der vorliegenden Anmeldung dargestellt. Bei ausgeschalteter Lichtquelle 18 wird das graphische Element 6 für einen Betrachter der Chipkarte 1 dagegen nicht wahrnehmbar sein.

Im Einzelnen weist der Kartenkörper 2 bei dem ersten Ausführungsbeispiel eine Kernfolie bzw. ein Inlay 7 auf, deren erste Hauptfläche, auf der das graphische Element 6 darstellbar ist, durch eine erste Deckfolie 8 und deren zweite Hauptfläche durch eine zweite Deckfolie 9 abgedeckt ist. Auf den Innenseiten, d.h. den an der Kernfolie bzw. dem Inlay 7 angrenzenden Hauptflächen, der Deckfolien 8 und 9 ist jeweils ein Aufdruck 10A und 10B vorgesehen, der im Bereich des sichtbaren Lichts opak ist. Die Deckfolien 8 und 9 sind jeweils im Bereich des sichtbaren Lichts transparent ausgebildet. Der Aufdruck kann auch auf beiden Seiten der Kernfolie bzw. des Inlays 7 aufgebracht sein. Im Bereich des graphischen Elements 6 ist kein Aufdruck 10A auf der oberen Deckfolie 8 vorgesehen.

In der Kernfolie bzw. dem Inlay 7 ist eine Ausnehmung 11 ausgespart, deren Form (zum Teil) durch das graphische Element 6 bestimmt sein kann. Innerhalb der Ausnehmung 11 ist die Kernfolie 7 durch einen Lichtleiter 12 ersetzt, wobei der Lichtleiter 12 einen lichtwandelnden Bereich 13 und einen farblos transparenten Bereich 14 umfasst. Der transparente Bereich 14 kann dabei durch die Form des graphischen Elements 6 bestimmt sein und liegt in jedem Fall, unter dem graphischen Element 6, wobei der transparente Bereich 14 durch den Aufdruck 10A der oberen Deckfolie 8 nicht oder nur teilweise verdeckt wird. Folgt die Form des transparenten Bereichs 14 nicht der Form des graphischen Elements 6, so kann die Form des graphischen Elements 6 durch den Aufdruck 10A der oberen Deckfolie 8 bestimmt sein. Ein Teil des Aufdrucks 10B ist für den Betrachter durch den farblosen transparenten Bereich 14 hindurch sichtbar. Der Aufdruck 10B ist derart angepasst an die für den Betrachter des Datenträgers sichtbare Grundgestaltung des Datenträgers, dass das graphische Element 6 bei ausgeschalteter Lichtquelle 18 nicht wahrnehmbar ist. Die Grundgestaltung (Kartenlayout) kann beispielsweise durch den Aufdruck 10A gebildet sein. Erst bei eingeschalteter Lichtquelle 18 erscheint für den Betrachter das graphische Element 6 (siehe Figur 3).

Die Deckfolien 8 und 9 erstrecken sich jeweils über die Ausnehmung 11, so dass der Lichtleiter 12 beidseitig von den Deckfolien 8 und 9 abgedeckt wird. Der Aufdruck 10A auf der oberen Deckfolie 8 erstreckt sich bereichsweise über den farblos transparenten Bereich 14. Die durch den Aufdruck 10A gebildete Kontur, die dem graphischen Element 6 entspricht, kann gegebenenfalls vollständig über dem farblos transparenten Bereich 14 liegen. Alternativ kann der Aufdruck 10A vollständig außerhalb des farblos transparenten Bereiches 14 liegen. Die Grundgestaltung kann zumindest teilweise durch den Aufdruck 10A, aber auch erst durch weitere nicht dargestellte Sicherheitselemente oder Aufdrucke gebildet werden.

In dem lichtwandelnden Bereich 13 ist eine Lichtquelle in Gestalt einer Leuchtdiode 18 angeordnet. In der Ausgestaltung gemäß Fig. 1 und 2 ist die Leuchtdiode 11 nicht eingeschaltet. Demgegenüber ist in der Darstellung der Fig. 3 und 4 die Leuchtdiode 18 eingeschaltet, was durch die von der Leuchtdiode 18 ausgehenden Lichtstrahlen symbolisiert ist. Ferner ist dies in den Fig. 1 und 2 zeichnerisch durch die farblich veränderte Darstellung der Fläche des graphischen Elements 6 repräsentiert.

Zur Stromversorgung der Leuchtdiode 18 ist in der Kernfolie bzw. dem Inlay 7 eine Antennenspule 3 vorgesehen. Die Stromversorgung kann dann beispielsweise über ein externes Gerät erfolgen, welches zur Durchführung einer Datenübertragung ein elektromagnetisches Feld erzeugt, welches auf die Antennenspule 3 der Chipkarte 1 einwirkt. Die diesbezügliche Beschaltung der Leuchtdiode 18 ist nicht mehr dargestellt, da diese vorliegend nicht entscheidend ist. Alternativ könnte die Chipkarte eine eigene Stromversorgung, wie eine Batterie, aufweisen oder über das Kontrollfeld durch ein externes Gerät mit Strom versorgt werden.

Der Aufdruck 10A und 10B auf den Deckfolien 8 und 9 ist opak. Wie unschwer aus den Schnittdarstellungen 2 und 4 hervorgeht, erstreckt sich der Aufdruck 10A und 10B auf beiden Seiten der Chipkarte 1 vollständig über den lichtwandelnden Bereich 13, so dass von der Leuchtdiode 18 emittiertes Licht nur lateral in Richtung des transparente Bereichs 14 geleitet werden kann. Demgegenüber kann von der Leuchtdiode 18 erzeugtes Licht nicht senkrecht aus dem Kartenkörper 2 der Chipkarte 1 austreten.

Der lichtwandelnde Bereich 13 besteht aus einem Kunststoff, beispielsweise Polycarbonat oder PVC, in den ein fluoreszierender Farbstoff eingelagert ist. Bei Bestrahlung mit Licht werden Farbstoffpartikel (nicht dargestellt) zur Fluoreszenz angeregt, welche dann in alle Richtungen Fluoreszenzlicht ausstrahlen, das eine größere Wellenlänge als das einfallende Licht aufweist. Die von den Farbstoffpartikeln ausgehenden Lichtstrahlen werden als Sekundärlicht bezeichnet, welches innerhalb des Lichtleiters 12 zum transparenten Bereich 14 weiter geleitet wird. Je nach Wellenlänge des Lichts erscheint das graphische Element 6 bei eingeschalteter Leuchtdiode 18 dann in einer entsprechenden Farbe, welche sich deutlich von der Darstellung des graphischen Elements 6 bzw. der Farbe des durch den klar transparenten Bereichs 14 sichtbaren Aufdruck 10B bei nicht eingeschalteter Leuchtdiode 18 unterscheidet. Dies bedeutet, bei eingeschalteter Leuchtdiode 18 wird ein farbiges Leuchten des graphischen Elements 6 erzeugt. Wenn demgegenüber die Leuchtdiode ausgeschaltet ist, fällt in diesem Moment nicht das leuchtende Merkmal des graphischen Elements 6 durch Fluoreszenzfarbe auf, sondern die Farbe des unter dem klar transparenten Bereich 14 liegenden Materials, d.h. des Aufdrucks 10B.

In einer alternativen Ausgestaltung könnte die Leuchtdiode 18 auch in einem weiteren nicht dargestellten, gegebenenfalls farblos transparent ausgebildeten, Bereich des Lichtleiters angeordnet sein. Das primäre Licht der Leuchtdiode gelangt dann vom weiteren Bereich in den lichtwandelnden Bereich 13 (und das Sekundärlicht vom lichtwandelnden Bereich 13 in den farblos transparenten Bereich 14).

Im lichtwandelnden Bereich 13 können beispielsweise UV-aktive Farbpigmente zum Einsatz kommen, die, je nach Wellenlänge, auf der sie selektiv sind, durch Tageslicht nicht oder nur kaum angeregt werden. Der Grund hierfür besteht darin, dass in den Kunststoffschichten des klar transparente Bereichs 14 und der Deckfolie 8 der dazu nötige UV-Anteil des Tageslichts absorbiert wird. Da die Leuchtdiode, die in der Schnittdarstellung der Fig. 2 und 4 ersichtlich ist, sich innerhalb der Lichtsammelfolie 13 mit den UV-aktiven Pigmenten befindet, werden die UV-aktiven Fluoreszenzfarbstoffe bei eingeschalteter Leuchtdiode 18 direkt angeregt. Das von den Farbpigmenten emittierte Sekundärlicht kann dann die transparenten Schichten, d.h. den farblos transparenten Bereich 14 und die transparente, obere Deckfolie 8, durchdringen und zum Auge des Betrachters gelangen. Speziell bei der in den Fig. 2 und 4 dargestellten, lateralen Anordnung von Leuchtdiode 18, des lichtwandelnden Bereichs 13 mit dem Fluoreszenzfarbstoff und dem farblos transparenten Bereich 14 ohne Fluoreszenzfarbstoff kann damit ein deutlicher Unterschied in der Erscheinungsweise des graphischen Elements zwischen aus- und eingeschalteter Beleuchtung geschaffen werden.

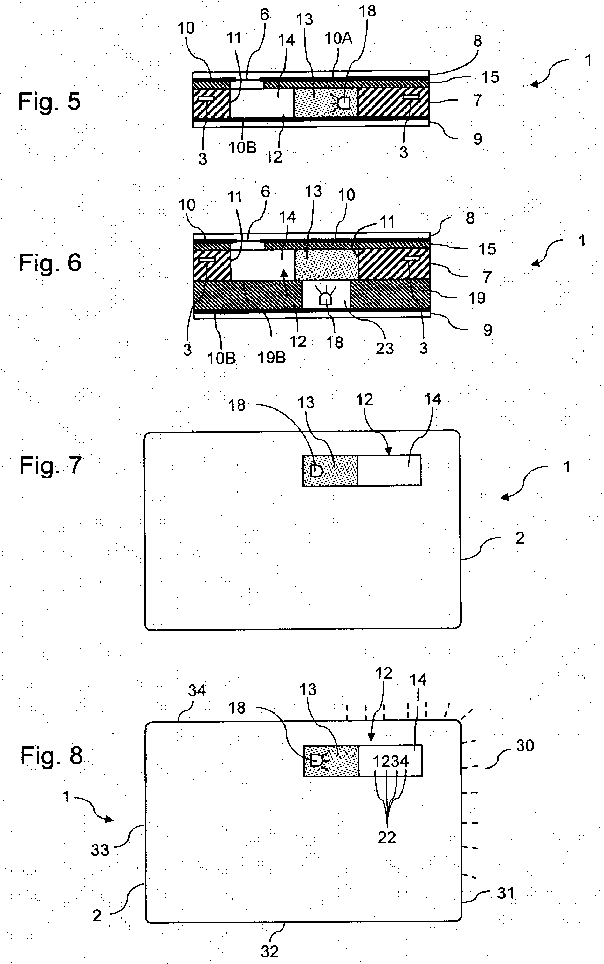

Der Kartenkörper 2 kann auf unterschiedliche Weise ausgestaltet sein. In dem in Fig. 5 gezeigten, zweiten Ausführungsbeispiel, das den Kartenkörper 2 in einer schematischen Schnittdarstellung zeigt, ist zusätzlich zu der Ausgestaltung gemäß Fig. 2 und 4 zwischen der oberen Deckfolie 8 und der Kernfolie 7 eine weitere Zwischenfolie 15 angeordnet, welche beispielsweise als semitransparente oder opake und/oder mit dem Aufdruck 10A versehene Schicht ausgebildet sein kann. Die Zwischenfolie 15 weist im Bereich des graphischen Elements eine Aussparung auf, die entweder der Gestalt des graphischen Elements 6 entspricht oder entsprechend größer ist. Wie im vorangegangenen ersten Ausführungsbeispiel ist die Leuchtdiode 18 in dem lichtwandelnden Bereich 13 angeordnet, so dass das von der Leuchtdiode 18 emittierte Licht seitlich in den farblos transparenten Bereich 14 geleitet wird.

In einer nicht dargestellten Alternative zu Figur 4 oder ergänzend hierzu könnte die Chipkarte eine Zwischenschicht unterhalb des Lichtleiters 12, also auch des transparenten Bereiches 14, aufweisen. Für den Betrachter wäre dann bei ausgeschalteter Lichtquelle eine Fläche dieser Zwischenschicht durch den farblos transparenten Bereich hindurch sichtbar.

Fig. 6 zeigt ein drittes Ausführungsbeispiel der erfindungsgemäßen Chipkarte 1, wobei wiederum der Kartenkörper 2 in einer schematischen Schnittansicht dargestellt ist. Zusätzlich zu der in Fig. 5 dargestellten Ausführung ist zwischen der Kernfolie 7 und der unteren Deckschicht 9 eine weitere Kernfolie 19 angeordnet. Das Material der Kernfolie 19 besteht beispielsweise aus opakem Kunststoff. In der weiteren Kernfolie 19 ist eine Ausnehmung 23 vorgesehen, die unterhalb des lichtwandelnden Bereiches 13 angeordnet ist. In dieser Ausnehmung 23 ist die Leuchtdiode 18 angeordnet, die das von ihr abgegebene Licht von außerhalb in den lichtwandelnden Bereich 13 einkoppelt. In diesem Beispiel ist eine Fläche 19B der Kernfolie 19 unter dem transparenten Bereich angeordnet und zunächst für den Betrachter sichtbar.

Allgemein kann eine erfindungsgemäße Chipkarte mehrere Lichtleiter in verschiedenen Ebenen des Kartenkörpers aufweisen. Die mehreren Lichtleiter können dabei, sofern sie in mehreren Ebenen angeordnet sind, rechtwinklig oder sich in einem beliebigen Winkel kreuzen oder parallel verlaufen.

Ist in den Ausführungsbeispielen gemäß den Fig. 5 und 6 die Zwischenfolie 15 semitransparent, so lässt diese Strahlung von der Leuchtdiode 18 in Richtung zur Kartenoberfläche durch. Die Leuchtdiode 18 zeichnet sich jedoch im ausgeschalteten Zustand nicht als Fremdkörper in der Chipkarte 1 ab.

Die Zwischenfolie 15 könnte auch als opake Schicht ausgebildet sein, welche für von der Leuchtdiode 18 emittiertes Licht in Richtung der Kartenoberfläche lichtundurchlässig ist. In diesem Fall ist es nicht erforderlich, dass der auf der oberen Deckschicht 8 aufgebrachte Aufdruck 10A opak ist. Die Zwischenfolie 15 kann beispielsweise auch als reflektive Metallfolie ausgebildet sein oder mit einer Metallisierung versehen sein. In diesem Fall könnte der Aufdruck 10A zumindest abschnittsweise im Bereich der Metallisierung oder Metallfolie entfallen. Die Zwischenfolie 15 könnte als sog. vollflächige Folie, Kinegramm, Hologramm, gedruckte oder aufgedampfte metallische Farbe oder Farbe mit Metalleffekt oder aufgepatchte reflektierende Folie ausgebildet sein. Hierduch ergibt sich eine höhere Leuchtkraft, weil die Metallisierung im Vergleich zu einer opaken Schicht eine geringere Absorption aufweist. Alternativ könnte die Metallfolie oder Metallisierung auch auf der von der Kernfolie 7 abgewandten Hauptfläche der oberen Deckschicht 8 aufgebracht sein.

Eine insbesondere als Abdeckung der Leuchtdiode 18 genutzte Metallisierung der Zwischenfolie 15 oder alternativ der Deckfolie 8 kann auch zur Personalisierung der Chipkarte 1 genutzt werden. Entsprechende Ausführungsbeispiele sind in den Fig. 7 bis 10 dargestellt. Beispielsweise kann ein Personalisierungsmerkmal in Gestalt einer durch Laserung eingebrachten Codierung (z.B. einer Ziffernfolge) vorgesehen sein, welche bei eingeschalteter Lichtquelle bzw. Leuchtdiode 18 als graphisches Element sichtbar wird. Hierzu wird beispielsweise die auf der Zwischenfolie 15 im Bereich des lichtwandelnden Bereiches 13 oder des farblos transparenten Bereichs 14 aufgebrachte Metallisierung selektiv mittels Laser entfernt, um Austrittsöffnungen für das Licht zu schaffen. Es versteht sich, dass in diesem Fall entweder der opake Aufdruck 10A nicht vorhanden ist oder aber die Metallisierung und das Personalisierungsmerkmal zumindest stellenweise nicht verdeckt. Das Personalisierungsmerkmal kann beispielsweise bei Betrieb der Chipkarte im Feld eines kontaktlosen Kommunikationspartners/Lesegeräts aufleuchten. Dies ist beispielsweise im vierten Ausführungsbeispiel gemäß den Fig. 7 und 8 dargestellt.

Beide Figuren zeigen eine schematische Aufsicht auf eine erfindungsgemäße Chipkarte 1. In den Darstellungen sind jeweils die Leuchtdiode 18 und der die Leuchtdiode direkt umgebende lichtwandelnde Bereich 13 mit Fluoreszenzfarbstoff zwar zeichnerisch dargestellt. Tatsächlich sind diese an dieser Stelle natürlich nicht sichtbar, weil diese, wie beschrieben, durch die reflektive Metallfolie bzw. die Metallisierung abgedeckt sind. Zudem ist der farblos transparente Bereich 14 mit der Metallisierung sichtbar, wobei in Fig. 7 die Leuchtdiode 18 nicht eingeschaltet ist, so dass das Personalisierungsmerkmal im transparenten Bereich 14 nicht deutlich wird. Erst bei eingeschalteter Leuchtdiode 18 erscheint aufgrund der selektiv aufgebrachten Austrittsöffnungen 22 (graphisches Element) in der Metallisierung das Personalisierungsmerkmal in Gestalt der Ziffernfolge "1234". In diesem Ausführungsbeispiel ist der transparente Bereich 14 mit der Metallisierung und dem Personalisierungsmerkmal lateral neben dem lichtwandelnden Bereich 13 mit der Leuchtdiode 18 angeordnet. Dies ist nicht zwingend. Das Personalisierungsmerkmal könnte auch über dem lichtwandelnden Bereich 13 angeordnet sein, so dass das Personalisierungsmerkmal dann entsprechend der verwendeten Fluoreszenzpigmente des lichtwandelnden Bereichs 13 farbig erscheint.

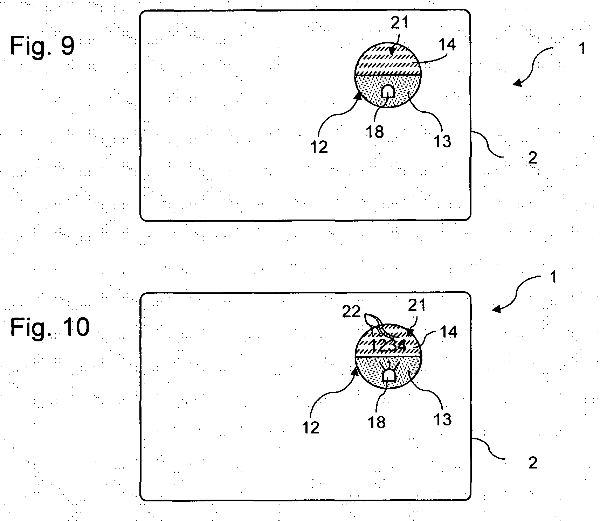

Die Fig. 9 und 10 zeigen ein weiteres Ausführungsbeispiel, wobei der Lichtleiter 12 lediglich beispielhaft kreisrund ausgebildet ist. Die Leuchtdiode 18 (in Fig. 9 nicht eingeschaltet) ist wiederum innerhalb des mit Fluoreszenzfarbstoff versehenen lichtwandelnden Bereiches 13 angeordnet und gibt ihr Licht in Richtung des farblos transparenten Bereichs 14 mit der darüber angeordneten Metallisierung ab, in dem der Lichtleiter 12 transparent ist. In Fig. 10 ist die gleiche Anordnung mit eingeschalteter Leuchtdiode 18 dargestellt. Zur Verschleierung des Personalisierungsmerkmals in Gestalt der als Ziffern "1234" ausgebildeten Austrittsöffnung 22 ist ein Störmuster 21 über die Metallisierung aufgebracht. Das Störmuster 21 kann beispielsweise mit speziellen Kopierschutzfarben oder mit herkömmlichen Farben erzeugt sein. Erstere treten dann besonders hervor, wenn die Chipkarte 1 auf einem Fotokopierer kopiert wird. Das Störmuster 21 umfasst ein entsprechendes Muster und/oder eine entsprechende Oberflächenstruktur, um das graphische Element 6 zu verschleiern.

In den vorangegangenen Ausführungsbeispielen wurde lichtwandelnder Bereich mit UV-aktiven Fluoreszenzfarbstoffen beschrieben. Anstelle dieser können Nachleuchtpigmente eingesetzt werden, um so einen anhaltenden Leuchteffekt zu erzielen, bei dem das Nachleuchten der Farbe langsam abnimmt.

Ein Kartenkörper umfasst naturgemäß zwei Hauptseiten, eine Oberseite und eine Unterseite, sowie eine Kante, die aus vier Teilkanten besteht. Der im Folgenden näher beschriebene Effekt eines Kantenleuchtens kann unabhängig von den bisher beschriebenen Aspekten eingesetzt werden. Ein Kantenleuchten ist vorteilhaft mit jeder der bisher beschriebenen Ausgestaltungen kombinierbar, wird jedoch nur anhand von Bezugszeichen aus einer Figur beschrieben.

In Fig. 8 sind die stets vorhandenen vier Seitenkanten mit den Bezugszeichen 31 bis 34 versehen. In der Figur ist die rechte Kante 31 vollständig leuchtend und die hintere Kante 34 abschnittsweise leuchtend dargestellt. Das Leuchten 30 der Kante ist mittels gestrichelter Linien dargestellt.

Die Kante einer Karte ist ohne Aktivierung der Lichtquelle vorzugsweise ebenfalls unscheinbar (siehe Figur 7). Erst bei Aktivierung der Lichtquelle tritt aus der Kante Licht einer bestimmten Farbe aus. Insbesondere kann eine (oder mehrere) Innenlage(n) des Kartenkörpers als Lichtleiter oder als transparente Folie ausgebildet sein, um das Licht der Lichtquelle zur Kante zu leiten.

Durch das Kantenleuchten 30 wird die Aufmerksamkeit des Betrachters erregt, er erkennt also schneller als ohne Kantenleuchten, dass eine Änderung erfolgt ist. Insbesondere wird er durch das Kantenleuchten schneller auf das nun für ihn sichtbare graphische Element aufmerksam.

Das Kantenleuchten 30 wird an mindestens einer Teilkante erzeugt. Vorzugsweise leuchten mindestens 20% bzw. 38% des Kantenumfangs. Beispielsweise können zwei gegenüberliegende Teilkanten 31 und 33 oder 32 und 34 leuchten. Die Kante kann vollständig leuchten, vollumfänglich. Andererseits kann das Leuchten der Kante in einem Teilabschnitt erfolgen, dessen Position an die Position des grafischen Elements angepasst ist. In Figur 8 leuchte die rechte Teilkante 31 sowie ein Abschnitt der hinteren Teilkante 34, um den Betrachter auf das grafische Element in der rechten, hinteren Kartenkörperoberseite hinzuweisen. Maximal leuchten, beispielsweise für eine solche Hinweisfunktion, 50% des Kantenumfangs (minimal jedoch 20%).

Um für den Betrachter der Oberseite des Kartenkörpers das eigentlich seitwärts austretende Licht als Kantenleuchten 30 besser wahrnehmbar zu machen, kann der Kartenkörper angepasst sein. Insbesondere ist der Kartenkörper eingerichtet, einen Anteil des aus der Kante in Richtung des Betrachters der Oberseite austretenden Lichts zu erhöhen, vorzugsweise soweit das mehr als ein Drittel des Lichtes zur Oberseite hin austritt. Für diesen Zweck kann beispielsweise die Kantenfläche stark streuend bzw. mit Vorzugsrichtung (nach oben (und unten) streuend ausgebildet werden. Ebenso kann die das Licht der Lichtquelle leitende Innenlage des Kartenkörpers mit Streukörpern oder streuend ausgebildet sein. Ein besonders ausgeprägtes Leuchten in der gewünschten Richtung zur Oberseite ergibt sich, wenn die Kantenfläche beispielsweise in ihrer unteren Hälfte intransparent ist (z.b. mittels Beschichtung, Laserung, ...).

Je nach gewünschtem Erscheinungsbild kann der Effekt des Kantenleuchtens 30 auf verschiedene Arten unterstützt werden.

In einer ersten Ausprägung ist eine komplette Innenlage (Schicht, Inlay) des Kartenkörpers farblos transparent. Das Licht der in der Karte befindlichen Lichtquelle wird in seiner ursprünglichen Lichtfarbe (wie es von der LED emittiert wird) weiter zu den Teilkanten der Karte geleitet.

In einer zweiten Ausprägung ist eine komplette Innenlage (Schicht, Inlay) des Kärtenkörpers transparent und zugleich gleichmäßig oder ungleichmäßig mit einem Farbstoff (z.B. Fluoreszenzfarbstoff) versehen. Das Licht der LED wird weiter zu den Teilkanten der Karte geleitet, wobei das Licht dabei in seiner Lichtfarbe durch den im Lichtleiter enthaltenen Farbstoff in seiner Farbe beeinflusst wird.

In einer dritten Ausprägung ist der Farbstoff im Lichtleiter nur lokal im Bereich einer (LED als) Lichtquelle vorhanden, damit der Farbstoff des Lichtleiters bei ausgeschalteter LED nicht bereits an den Kanten der Karte sichtbar ist. Dies kann z.B. durch Einlegen einer speziellen Folie in diesem Bereich erreicht werden, wobei der Lichtleiter im Bereich der Außenkanten der Chipkarte farblos transparent ist. Ist die LED ausgeschaltet, tritt kein Licht in den Lichtleiter ein und die Kante erscheint in einem unscheinbarem hellen Grauton, wie man es von Karten mit transparentem Kern (die keine LED enthalten) her bereits kennt. Die Lichtverteilung zu den Kanten kann durch Variation der lateralen Geometrie (x/y-Ausdehnung) der eingelegten Folie beeinflusst werden, da diese ja andere Absorptions- und Farbkonversionseigenschaften hat als der umliegende transparente Lichtleiter.

Gerade in einer für ein Kantenleuchten ausgebildeten Karte gewinnt die Abdeckung der Lichtquelle zum Betrachter eine größere Bedeutung. Die Abdeckung kann, wie bereits mehrfach beschrieben, beispielsweise mittels Aufdruck 10 oder Zwischenschicht 15, ggf. als metallische Schicht, erfolgen. Eine außerhalb des grafischen Elements vollflächige Abdeckung ist besonders vorteilhaft, beispielsweise um anteilig mehr Licht zu den Kanten zu leiten und/oder um andere beim Einschalten der Lichtquelle auftretende und für den Betrachter wahrnehmbare (also gegebenenfalls ablenkende) optische Änderungen zu vermeiden.

Eine Anzahl, eine Position und / oder eine Ausrichtung von mehreren Lichtquellen kann derart ausgewählt sein, dass die Kante gleichmäßig ausgeleuchtet wird. Insbesondere für ein vollumfängliches, gleichmäßiges Kantenleuchten ist eine geeignete Auswahl hilfreich. Beispielsweise können zwei Lichtquellen vorgesehen sein. Die Position der Lichtquellen kann gleichmäßig über die Fläche der Oberseite verteilt sein (z.b. je eine der beiden LED mittig im Abstand von einem Drittel der Kantenlänge der vorderen Kante 32). Die Ausrichtung der (teilweise gerichtet abstrahlenden) Lichtquellen kann gewählt werden, bei beispielsweise zwei Lichtquellen im Datenträger kann eine jeweils entgegengesetzte Abstrahlrichtung gewählt werden.

## Patentansprüche

1. Datenträger (1) mit einer Lichtquelle (18) und einem graphischen Element (6), wobei das graphische Element (6) in seiner Erscheinung durch die in einem Körper (2) des Datenträgers (1) angeordnete Lichtquelle (18) in Abhängigkeit des Schaltzustands der Lichtquelle (18) veränderbar ist,
wobei der Körper (2) ein Inlay (7) umfasst,
wobei auf einer Seite des Inlays (7) eine erste transparente Deckfolie (8) und auf der anderen gegenüberliegenden Seite des Inlays (7) eine zweite transparente Deckfolie (9) angeordnet ist,
wobei auf der ersten Deckfolie (8) auf der dem Inlay (7) zugewandten Seite ein opaker Aufdruck (10A) angeordnet ist,
wobei auf der zweiten Deckfolie (9) auf der dem Inlay (7) zugewandten Seite ein opaker Aufdruck (10B) angeordnet ist,
wobei das Inlay (7) eine Ausnehmung (11) aufweist,
wobei innerhalb der Ausnehmung (11) ein Lichtleiter (12) angeordnet ist,
wobei der Lichtleiter (12) einen farblos transparenten Bereich (14) umfasst,
wobei der Körper (2) eine Lichtquelle (18) umfasst, um den Lichtleiter (12) zu beleuchten,
wobei sich der opake Aufdruck (10A) zumindest bereichsweise über den farblos transparenten Bereich (14) erstreckt, um eine Kontur des graphischen Elements (6) zu bilden,
sodass bei ausgeschalteter Lichtquelle (18) von außen im Bereich des graphischen Elements (6) der Aufdruck (10B) sichtbar ist und bei eingeschalteter Lichtquelle (18) von außen die Kontur des graphischen Elements sichtbar ist.

2. Datenträger (1) nach Anspruch 1, **dadurch gekennzeichnet, dass** der opake Aufdruck (10B, 19B) eingerichtet ist, um das graphische Element (6) bei ausgeschalteter Lichtquelle (18) zu verbergen und/oder das graphische Element (6) erst bei eingeschalteter Lichtquelle (18) wahrnehmbar zu machen.

3. Datenträger nach Anspruch 1 oder 2, **dadurch gekennzeichnet, dass** der Lichtleiter (12) einen Umwandlungs-Abschnitt (13) zur Umwandlung von eingestrahltem Licht der Lichtquelle (18) in Sekundärlicht umfasst.

4. Datenträger nach einem der vorhergehenden Ansprüche, **dadurch gekennzeichnet, dass** die Lichtquelle (18) innerhalb des Lichtleiters (12), vorzugsweise innerhalb des Umwandlungs-Abschnittes (13), angeordnet ist.

5. Datenträger nach einem der vorhergehenden Ansprüche, **dadurch gekennzeichnet, dass** die Lichtquelle (18) unter einer opaken Schicht angeordnet ist.

6. Datenträger nach einem der vorhergehenden Ansprüche, **dadurch gekennzeichnet, dass** der Umwandlungsabschnitt (13) auf zumindest einer Seite von einer metallisch reflektierenden Schicht (10) umgeben ist.

7. Datenträger nach einem der vorhergehenden Ansprüche, **dadurch gekennzeichnet, dass** oberhalb des transparenten Abschnitts (14) des Lichtleiters (12) eine metallisch reflektierende Schicht (10) selektiv entfernt ist, um Austrittsöffnungen (22) für von der Lichtquelle (18) abgegebenes Licht zu schaffen.

8. Datenträger nach einem der vorhergehenden Ansprüche, **dadurch gekennzeichnet, dass** der Datenträger angrenzend an das graphische Element (6, 22) zumindest eine gemusterte Störfläche (21) umfasst, die einem Betrachter das Wahrnehmen des graphischen Elements (6, 22) bei ausgeschalteter Lichtquelle (18) erschweren.

9. Datenträger nach einem der vorhergehenden Ansprüche, **dadurch gekennzeichnet, dass** das graphische Element (6) mehrere Teilbereiche (22) umfasst, wobei zwischen den Teilbereichen eine gemusterte Störfläche (21) (21) angeordnet ist.

10. Datenträger nach Anspruch 8 oder 9, **dadurch gekennzeichnet, dass** die Störfläche (21) durch eine strukturierte Oberfläche und/oder ein durch Drucken aufgebrachtes Störmuster gebildet wird.

11. Datenträger nach einem der vorhergehenden Ansprüche, **dadurch gekennzeichnet, dass** der Datenträger eine für den Betrachter wahrnehmbare optische Grundgestaltung aufweist, wobei zumindest die wahrnehmbare Fläche (10) und optional der farblos transparente Abschnitt (14), die Störfläche (21) und/oder die Grundgestaltung angepasst sind, damit der Betrachter bei ausgeschalteter Lichtquelle (18) nur die Grundgestaltung - ohne das graphische Element (6) - wahrnimmt.

12. Datenträger nach einem der vorhergehenden Ansprüche, **dadurch gekennzeichnet, dass** der Lichtleiter (12) eine streifenförmige Gestalt aufweist und sich über einen Teil einer Seitenlänge des Datenträgerkörpers (2) oder über die gesamte Seitenlänge des Datenträgerkörpers (2) erstreckt.

13. Datenträger nach einem der vorhergehenden Ansprüche, **dadurch gekennzeichnet, dass** die Lichtquelle (18) von ihr abgegebenes Licht von unten oder von oben in den Lichtleiter (12), insbesondere in den Umwandlungs-Abschnitt (13), leitet.

14. Datenträger nach einem der vorhergehenden Ansprüche, **dadurch gekennzeichnet, dass** mehrere streifenförmig ausgebildete Lichtleiter (12, 17) in mehreren Ebenen des Datenträgerkörpers (2) angeordnet sind und/oder dass sich zwei in unterschiedlichen Ebenen angeordnete Lichtleiter (12, 17) kreuzen oder parallel verlaufen.

## Claims

1. A data carrier (1) with a light source (18) and a graphical element (6), wherein the graphical element (6) is variable in its appearance by the light source (18) arranged in a body (2) of the data carrier (1) in dependence on the switching state the light source (18),
wherein the body (2) comprises an inlay (7),
wherein on one side of the inlay (7) a first transparent cover foil (8) is arranged and on the other, opposite side of the inlay (7) a second transparent cover foil (9) is arranged,
wherein on the first cover foil (8) on the side facing the inlay (7) an opaque print (10A) is arranged,
wherein on the second cover foil (9) on the side facing the inlay (7) an opaque print (10B) is arranged,
wherein the inlay (7) has a recess (11),
wherein within the recess (11) a light guide (12) is arranged,
wherein the light guide (12) comprises a colorlessly transparent region (14),
wherein the body (2) comprises a light source (18) in order to illuminate the light guide (12),
wherein the opaque print (10A) extends at least regionally over the colorlessly transparent region (14) in order to form a contour of the graphical element (6),
so that, when the light source (18) is switched off, the print (10B) is visible from the outside in the region of the graphical element (6) and
when the light source (18) is switched on, the contour of the graphical element is visible from the outside.

2. The data carrier (1) according to claim 1, **characterized in that** the opaque print (10B, 19B) is adapted to conceal the graphical element (6) when the light source (18) is switched off and/or to make the graphical element (6) perceivable only when the light source (18) is switched on.

3. The data carrier according to claim 1 or 2, **characterized in that** the light guide (12) comprises a conversion section (13) for the conversion of irradiated light of the light source (18) into secondary light.

4. The data carrier according to any one of the preceding claims, **characterized in that** the light source (18) is arranged within the light guide (12), preferably within the conversion section (13).

5. The data carrier according to any one of the preceding claims, **characterized in that** the light source (18) is arranged below an opaque layer.

6. The data carrier according to any one of the preceding claims, **characterized in that** the conversion section (13) is surrounded by a metallically reflecting layer (10) on at least one side.

7. The data carrier according to any one of the preceding claims, **characterized in that** a metallically reflecting layer (10) is selectively removed above the transparent section (14) of the light guide (12) in order to create outlet openings (22) for light emitted by the light source (18).

8. The data carrier according to any one of the preceding claims, **characterized in that** adjacent to the graphical element (6, 22) the data carrier has at least one patterned interfering area (21) which impedes perception of the graphical element (6, 22) for a viewer when the light source (18) is switched off.

9. The data carrier according to any one of the preceding claims, **characterized in that** the graphical element (6) comprises several subregions (22), wherein a patterned interfering area (21) (21) is arranged between the partial regions.

10. The data carrier according to claim 8 or 9, **characterized in that** the interfering area (21) is formed by a structured surface and/or an interfering pattern applied by printing.

11. The data carrier according to any one of the preceding claims, **characterized in that** the data carrier has a basic optical configuration perceivable for the viewer, wherein at least the perceivable area (10) and optionally the colorlessly transparent section (14), the interfering area (21) and/or the basic configuration are adjusted so that the viewer perceives only the basic configuration - without the graphical element (6) - when the light source (18) is switched off.

12. The data carrier according to any one of the preceding claims, **characterized in that** the light guide (12) has a strip-shaped form and extends over a part of a side length of the data carrier body (2) or over the entire side length of the data carrier body (2).

13. The data carrier according to any one of the preceding claims, **characterized in that** the light source (18) guides light emitted by it from below or from above into the light guide (12), in particular into the conversion section (13).

14. The data carrier according to any one of the preceding claims, **characterized in that** several light guides (12, 17) of strip-shaped configuration are arranged in several planes of the data carrier body (2) and/or that two light guides (12, 17) arranged in different planes intersect or extend in parallel.

## Revendications

1. Support de données (1) comprenant une source lumineuse (18) et un élément graphique (6), cependant que l'élément graphique (6) est modifiable dans son apparence par la source lumineuse (18), agencée dans un corps (2) du support de données (1), en fonction de l'état de commutation de la source lumineuse (18),
cependant que le corps (2) comprend un intercalaire (7),
cependant que, sur un côté de l'intercalaire (7), un premier film de recouvrement transparent (8), et sur l'autre côté, opposé, de l'intercalaire (7), un deuxième film de recouvrement transparent (9) est agencé,
cependant que, sur le premier film de recouvrement (8), sur le côté tourné vers l'intercalaire (7), une impression opaque (10A) est agencée,
cependant que, sur le deuxième film de recouvrement (9), sur le côté tourné vers l'intercalaire (7), une impression opaque (10B) est agencée,
cependant que l'intercalaire (7) comporte un évidement (11),
cependant que, à l'intérieur de l' évidement (11), un conduit de lumière (12) est agencé,
cependant que le conduit de lumière (12) comprend une zone transparente incolore (14),
cependant que le corps (2) comprend une source lumineuse (18) pour éclairer le conduit de lumière (12),
cependant que l'impression opaque (10A) s'étend au moins par zones pardessus la zone transparente incolore (14), afin de constituer un contour de l'élément graphique (6),
de telle sorte que, quand la source lumineuse (18) est éteinte, depuis l'extérieur, dans la zone de l'élément graphique (6), l'impression (10B) est visible et
que, quand la source lumineuse (18) est allumée, depuis l'extérieur, le contour de l'élément graphique est visible.

2. Support de données (1) selon la revendication 1, **caractérisé en ce que** l'impression opaque (10B, 19B) est conçue pour cacher l'élément graphique (6) quand la source lumineuse (18) est éteinte, et/ou pour ne rendre perceptible l'élément graphique (6) que lorsque la source lumineuse (18) est allumée.

3. Support de données (1) selon la revendication 1 ou 2, **caractérisé en ce que** le conduit de lumière (12) comprend une section de conversion (13) destinée à la conversion de lumière irradiée de la source lumineuse (18) en lumière secondaire.

4. Support de données selon une des revendications précédentes, **caractérisé en ce que** la source lumineuse (18) est agencée à l'intérieur du conduit de lumière (12), de préférence agencée à l'intérieur de la section de conversion (13).

5. Support de données selon une des revendications précédentes, **caractérisé en ce que** la source lumineuse (18) est agencée sous une couche opaque.

6. Support de données selon une des revendications précédentes, **caractérisé en ce que** la section de conversion (13) est, au moins d'un côté, entourée d'une couche métalliquement réfléchissante (10).

7. Procédé selon une des revendications précédentes, **caractérisé en ce que,** au-dessus de la section transparente (14) du conduit de lumière (12), une couche métalliquement réfléchissante (10) est sélectivement enlevée afin d'engendrer des ouvertures de sortie (22) pour de la lumière émise par la source lumineuse (18).

8. Procédé selon une des revendications précédentes, **caractérisé en ce que** le support de données comprend, de manière adjacente à l'élément graphique (6, 22), au moins une surface de perturbation (21) à motifs qui rendent difficile à un observateur la perception de l'élément graphique (6, 22) quand la source lumineuse (18) est éteinte.

9. Support de données selon une des revendications précédentes, **caractérisé en ce que** l'élément graphique (6) comprend plusieurs zones partielles (22), cependant que, entre les zones partielles, une surface de perturbation (21) à motifs est agencée.

10. Support de données selon la revendication 8 ou 9, **caractérisé en ce que** la surface de perturbation (21) est constituée par une surface structurée et/ou par un motif de perturbation appliqué par impression.

11. Support de données selon une des revendications précédentes, **caractérisé en ce que** le support de données présente une configuration optique de base perceptible pour l'observateur, cependant qu'au moins la surface perceptible (10) et, en option, la section transparente incolore (14), la surface de perturbation (21) et/ou la configuration de base sont adaptées à ce que l'observateur, quand la source lumineuse (18) est éteinte, ne perçoive que la configuration - sans l'élément graphique (6).

12. Support de données selon une des revendications précédentes, **caractérisé en ce que** le conduit de lumière (12) est en forme de bande et s'étend sur une partie d'une longueur latérale du corps du support de données (2) ou sur la longueur latérale totale du corps du support de données (2).

13. Support de données selon une des revendications précédentes, **caractérisé en ce que** la source lumineuse (18) dirige la lumière émise par elle à partir du bas ou à partir du haut dans le conduit de lumière (12), en particulier dans la section de conversion (13).

14. Support de données selon une des revendications précédentes, **caractérisé en ce que** plusieurs conduits de lumière (12, 17) réalisés sous forme de bande sont agencés dans plusieurs plans du corps du support de données (2), et/ou que deux conduits de lumière (12, 17) agencés dans différents plans se croisent ou sont parallèles.
